# EUROPÄISCHE PATENTANMELDUNG

(11) **EP 0 849 569 A1**
(43) Veröffentlichungstag der Anmeldung: **24.06.1998**
(21) Anmeldenummer: 97120603.2
(22) Anmeldetag: 25.11.1997
(51) Int. Cl.: G01F 23/24

(54) **Füllstandsgrenzsensor und Verfahren zur Ermittlung Unter- oder Überschreitens einer vorgesehenen Füllhöhe von Flüssigkeit in einem Behälter**

(30) Priorität: 21.12.1996 DE 19653879
(71) Anmelder: Mannesmann VDO Aktiengesellschaft, 60388 Frankfurt/M. (DE)
(72) Erfinder: Schimmel, Ralf, 35789 Weilmünster (DE); Acht, Joachim, 65936 Frankfurt (DE); Lipfert, Stefan, 65779 Kelkheim (DE); Wallrafen, Werner, 65719 Hofheim (DE)
(74) Vertreter: Rassler, Andrea, Dipl.-Phys.

(57) **Zusammenfassung**

Ein Füllstandsgrenzsensor (3) hat ein Widerstandselement (4), welches einen oberhalb einer über der maximalen Flüssigkeitstemperatur liegenden Sprungtemperatur sprungartig verändernden elektrischen Widerstand aufweist. Das Widerstandselement (4) wird zunächst mit elektrischem Strom aufgeheizt. Anschließend wird der elektrische Widerstand des Widerstandselementes (4) gemessen. Bei mit Flüssigkeit (2) bedecktem Widerstandselement (4) wird die von dem elektrischen Strom erzeugte Wärme abgeleitet, so dass die Temperatur des Widerstandselementes (4) unterhalb seiner Sprungtemperatur liegt. Bei nicht von Flüssigkeit (2) bedecktem Widerstandselement (4) wird diese Wärme kaum abgeleitet, so dass seine Temperatur oberhalb der Sprungtemperatur verharrt.

## Beschreibung

Die Erfindung betrifft einen Füllstandsgrenzsensor, welcher zur Ermittlung eines Unter- oder Überschreitens einer vorgesehenen Füllhöhe von Flüssigkeit in einem Behälter ausgebildet ist, mit einem von elektrischem Strom durchflossenen, den elektrischen Widerstand bei steigender Temperatur verändernden Widerstandselement und mit einer Messeinheit zur Messung des elektrischen Widerstandes des elektrischen Leiters. Weiterhin betrifft die Erfindung ein Verfahren zum Ermitteln eines Unter- oder Überschreitens einer vorgesehenen Füllhöhe von Flüssigkeit in einem Behälter, wobei ein in der vorgesehenen Füllhöhe angeordnetes, seinen elektrischen Widerstand mit steigender Temperatur veränderndes Widerstandselement von einem elektrischen Strom aufgeheizt und anschließend dessen elektrischer Widerstand gemessen wird.

Solche Füllstandsgrenzsensoren werden in Kraftfahrzeugen beispielsweise in einem Getriebe, einer Brennkraftmaschine oder in einem Bremsflüssigkeitsbehälter häufig eingesetzt und sind aus der Praxis bekannt. Der Füllstandsgrenzsensoren hat als Widerstandselement einen bis in den Bodenbereich eines zu messenden Behälters geführten Widerstandsdraht. Zur Messung wird der Widerstandsdraht von einem elektrischen Strom durchflossen. Hierbei heizt sich der Widerstandsdraht auf und verändert dabei seinen elektrischen Widerstand. Da die hierbei entstehende Wärme des in die Flüssigkeit eintauchenden Bereiches des Widerstandsdrahtes von der Flüssigkeit wesentlich stärker abgeleitet wird als der Bereich oberhalb der Flüssigkeit, lässt sich aus dem ermittelten Widerstand der Füllstand der Flüssigkeit berechnen und mit einem Mindestfüllstand vergleichen.

Nachteilig ist hierbei, dass der ermittelte Widerstand des Widerstandsdrahtes von der Temperatur der Flüssigkeit beeinflusst wird. Hierdurch ist die Ermittlung des Füllstandes relativ ungenau. Deshalb ist eine Messung des Mindestfüllstandes von Motoröl in einer Brennkraftmaschine eines Kraftfahrzeuges mit diesem Füllstandsgrenzsensor nur mit großem Aufwand möglich.

Zur zuverlässigen Ermittlung des Füllstandes einer eine besonders hohe Temperatur aufweisenden Flüssigkeit sind auf der Flüssigkeit schwimmende Schwimmer mit einem Magneten bekannt geworden. Der Magnet schaltet bei einem Über- oder Unterschreiten eines vorgesehenen Füllstandes einen in der dem Füllstand entsprechenden Höhe angeordneten Reedkontakt. Ein solcher Füllstandsgrenzschalter gestaltet sich jedoch besonders kostenintensiv. Weiterhin besitzt dieser Füllstandsgrenzschalter bewegliche Bauteile, die klemmen können.

Der Erfindung liegt das Problem zugrunde, einen Füllstandsgrenzsensor der eingangs genannten Art so zu gestalten, dass er keine beweglichen Bauteile aufweist und dass mit ihm das Über- oder Unterschreiten eines Füllstandes einer Flüssigkeit auch bei hohen Temperaturen zuverlässig ermittelt werden kann. Weiterhin soll ein Verfahren zur Ermittlung eines Unter- oder Überschreitens einer vorgesehenen Füllhöhe von Flüssigkeit in einem Behälter geschaffen werden.

Das erstgenannte Problem wird erfindungsgemäß dadurch gelöst, dass das Widerstandselement ausschließlich in der vorgesehenen Füllhöhe angeordnet ist und einen oberhalb einer über der maximalen Flüssigkeitstemperatur liegenden Sprungtemperatur sprungartig verändernden elektrischen Widerstand aufweist.

Das Widerstandselement wird wie der Widerstandsdraht des bekannten Füllstandsgrenzsensors zunächst elektrisch aufgeheizt. Wenn die hierbei entstehende Wärme sehr schnell abgeleitet wird, ist das Widerstandselement ausreichend mit Flüssigkeit bedeckt. Da Luft die Wärme von dem Widerstandselement sehr schlecht ableitet, wird sich das Widerstandselement bei zu niedrigem Füllstand bis über die Sprungtemperatur (z. B. PTC-Element) aufheizen und diese Temperatur zunächst halten. Hierdurch kann ein ermittelter Widerstandswert eindeutig einem oberhalb oder unterhalb der Sprungtemperatur liegenden Temperaturbereich des Widerstandselementes zugeordnet und damit ein Über- oder Unterschreiten des Füllstandes der Flüssigkeit ermittelt werden. Da die Temperatur der Flüssigkeit unterhalb der Sprungtemperatur des Widerstandselementes liegt, ist ihr Einfluss auf das Messergebnis vernachlässigbar.

Der Füllstandsgrenzsensor ist gemäß einer vorteilhaften Weiterbildung der Erfindung für den Einsatz in besonders hohen Temperaturen geeignet, wenn das Widerstandselement ein PTC-Element ist. Ein solches PTC-Element hat eine besonders hohe Sprungtemperatur von ungefähr 250°C. Bis zu der Sprungtemperatur verringert sich der elektrische Widerstand des PTC-Elementes geringfügig mit steigender Temperatur. Oberhalb der Sprungtemperatur steigt der elektrische Widerstand sprunghaft an.

Der elektrische Widerstand des Widerstandselementes lässt sich gemäß einer vorteilhaften Weiterbildung der Erfindung besonders einfach bestimmen, wenn das Widerstandselement mit einem Vorwiderstand in Reihe geschaltet ist. Hierdurch wird die Spannung an dem Widerstandselement gemessen. Bei bekannter Gesamtspannung an Vorwiderstand und Widerstandselement ist die gemessene Spannung unmittelbar von dem elektrischen Widerstand des Widerstandselementes abhängig.

Die Montage des Widerstandselementes gestaltet sich gemäß einer anderen vorteilhaften Weiterbildung der Erfindung besonders einfach, wenn der Füllstandsgrenzsensor ein aus zwei Gehäuseteilen zusammensteckbares Gehäuse aufweist und wenn zu dem Widerstandselement führende Anschlussdrähte zwischen den beiden Gehäuseteilen eingeklemmt sind.

Eine Ableitung der durch das Aufheizen des Widerstandselementes erzeugten Wärme wird gemäß einer anderen vorteilhaften Weiterbildung der Erfindung zuverlässig verhindert, wenn das Widerstandselement mit den Anschlussdrähten verlötet oder verschweißt ist und wenn das Gehäuse ausschließlich Berührungspunkte mit den Anschlussdrähten aufweist. Weiterhin hat diese Gestaltung den Vorteil, dass das Widerstandselement von der Flüssigkeit oder der Luft frei umströmt werden kann.

Das Gehäuse lässt sich gemäß einer anderen vorteilhaften Weiterbildung der Erfindung besonders kostengünstig fertigen, wenn eines der Gehäuseteile mehrere dünnwandige Querstege aufweist, welche Rillen zur Aufnahme der Anschlussdrähte aufweisen, und wenn das zweite Gehäuseteil an den Anschlussdrähten anliegende Vorsprünge aufweist. Weiterhin wird durch diese Gestaltung eine Ableitung der Wärme über die Anschlussdrähte und das Gehäuse besonders gering gehalten.

Insbesondere bei niedrigen Temperaturen kann bei zu niedrigem Füllstand ein zwischen dem Widerstandselement und dem Gehäuse anhaftender Tropfen Flüssigkeit die Wärme von dem Widerstandselement ableiten und zu einer Fehlmessung führen. Eine solche Fehlmessung lässt sich gemäß einer anderen vorteilhaften Weiterbildung der Erfindung zuverlässig vermeiden, wenn zwischen dem Widerstandselement und den dazu benachbarten Bereichen des Gehäuses ein Abstand vorhanden ist.

Das ausschließlich von den Anschlussdrähten gehaltene Widerstandselement benötigt zu seiner schwingungssicheren Befestigung besonders starke Anschlussdrähte. Eine Ableitung der Wärme des Widerstandselementes über die Anschlussdrähte wird gemäß einer anderen vorteilhaften Weiterbildung der Erfindung besonders gering gehalten, wenn die Anschlussdrähte aus z. B. Konstantan gefertigt sind.

Ein minimaler und ein maximaler Füllstand lässt sich gemäß einer anderen vorteilhaften Weiterbildung der Erfindung einfach ermitteln, wenn der Füllstandsgrenzsensor zwei in unterschiedlicher Höhe angeordnete Widerstandselemente aufweist.

Das zweitgenannte Problem, nämlich die Schaffung eines Verfahrens zur Ermittlung eines Unter- oder Überschreitens einer vorgesehenen Füllhöhe von Flüssigkeit in einem Behälter, wird erfindungsgemäß dadurch gelöst, dass dem Widerstandselement beim Aufheizen soviel elektrische Energie zugeführt wird, wie zum Überschreiten einer den elektrischen Widerstand sprungartig verändernden Sprungtemperatur eines an der Luft befindlichen Widerstandselementes erforderlich ist.

Durch dieses Verfahren erhält man bei der Messung des elektrischen Widerstandes des Widerstandselementes einen Wert, der eindeutig dem Bereich über oder unter der Sprungtemperatur zugeordnet werden kann. Wenn das Widerstandselement in die Flüssigkeit eintaucht, wird die von dem elektrischen Strom erzeugte Wärme von der Flüssigkeit abgeleitet, und das Widerstandselement hat eine Temperatur und damit einen entsprechenden Widerstandswert unterhalb der Sprungtemperatur. Bei dem nicht in die Flüssigkeit eintauchenden Widerstandselement wird die Wärme nicht abgeleitet, so dass die Temperatur des Widerstandselementes oberhalb der Sprungtemperatur verharrt. Ein weiterer Vorteil dieses Verfahrens ist, dass an dem Widerstandselement anhaftende Flüssigkeit zunächst ebenfalls aufgeheizt wird. Dies führt beispielsweise bei kaltem Öl zur Verringerung seiner Viskosität und damit zu einem Abtropfen des Öls von dem Widerstandselement. Hierdurch werden Fehlmessungen zuverlässig verhindert.

Der Messvorgang benötigt gemäß einer vorteilhaften Weiterbildung der Erfindung besonders wenig Zeit, wenn das Widerstandselement über einen Vorwiderstand mit elektrischem Strom aufgeheizt und anschließend die Spannung an dem Widerstandselement gemessen wird. Die an dem Widerstandselement gemessene Spannung ist abhängig von dem elektrischen Widerstand des Widerstandselementes.

Ein zur Ermittlung eines minimalen Füllstandes von Motoröl in einer Brennkraftmaschine eines Kraftfahrzeuges eingesetzter Füllstandsgrenzsensor ist besonders zuverlässig, wenn mit dem Aufheizen des Widerstandselementes ungefähr fünf bis zehn Minuten nach einem Abschalten der Brennkraftmaschine begonnen wird.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: einen erfindungsgemäßen Füllstandsgrenzsensor mit einer schematischen Darstellung einer elektrischen Schaltung,
- Fig.: den Füllstandsgrenzsensor aus Fig.1,
- Fig.2: eine Schnittdarstellung durch den Füllstandsgrenzsensor aus Fig.2 entlang der Linie III - III,
- Fig.3: eine Schnittdarstellung durch den Füllstandsgrenzsensor aus Fig.2 entlang der Linie IV - IV.

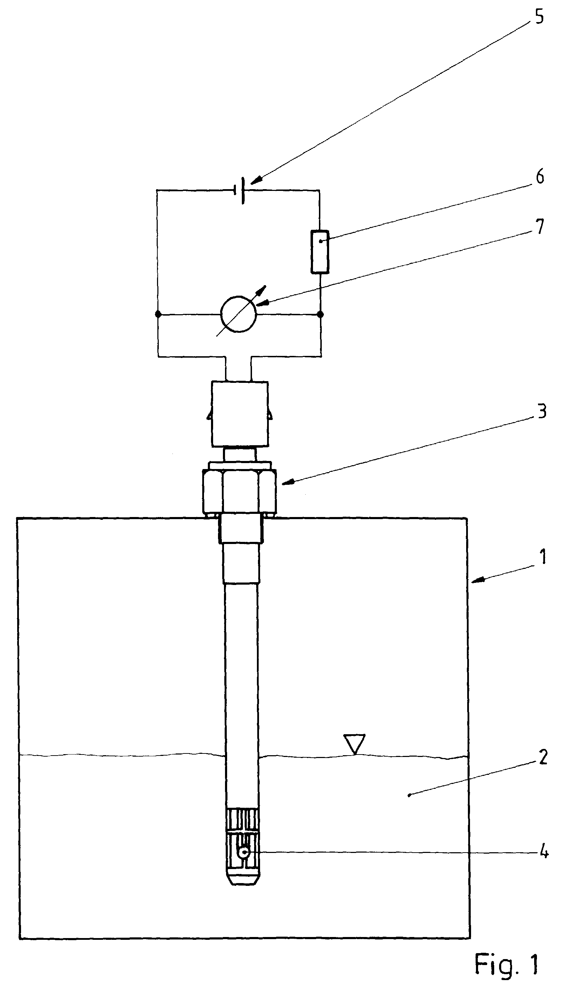

Die Figur 1 zeigt einen in einem Behälter 1 mit Flüssigkeit 2 angeordneten Füllstandsgrenzsensor 3. Der Füllstandsgrenzsensor 3 hat an seinem unteren Ende ein in die Flüssigkeit 2 eintauchendes Widerstandselement 4, welches von einer außerhalb des Behälters 1 angeordneten Spannungsquelle 5 über einen Vorwiderstand 6 mit elektrischem Strom versorgt wird. Bei dem Widerstandselement 4 kann es sich beispielsweise um ein PTC-Element handeln, bei dem sich der elektrische Widerstand mit steigender Temperatur bis zum Erreichen einer materialabhängigen Sprungtemperatur geringfügig verringert und sich oberhalb der Sprungtemperatur sprungartig erhöht. Der elektrische Widerstand des Widerstandselementes 4 wird mit einem an dem Widerstandselement 4 anliegende Spannung messenden Voltmeter 7 ermittelt. Bei einer Überschreitung der Sprungtemperatur des Widerstandselementes 4 steigt die von dem Voltmeter 7 gemessene Spannung sprunghaft an. Da die Flüssigkeit 2 das Widerstandselement 4 wesentlich stärker kühlt als über der Flüssigkeit 2 befindliche Luft, lässt sich hierdurch ermitteln, ob das Widerstandselement 4 mit Flüssigkeit 2 bedeckt ist.

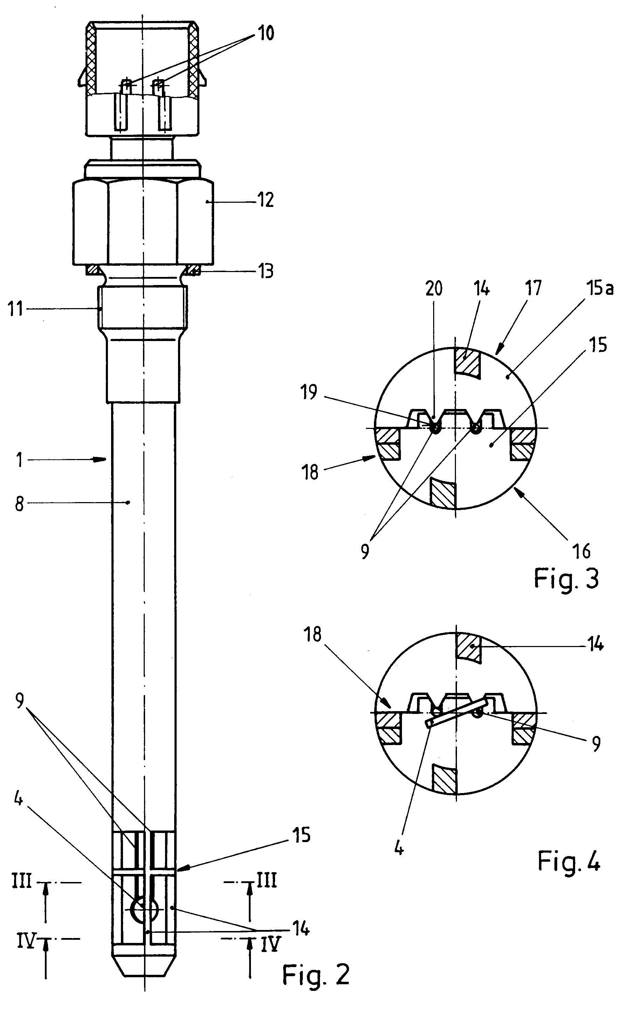

Die Figur 2 zeigt den Füllstandsgrenzsensor 3 aus Figur 1 mit dem im unteren Bereich eines Gehäuses 8 angeordneten Widerstandselement 4. Von dem Widerstandselement 4 führen Anschlussdrähte 9 zu an der Oberseite des Gehäuses 8 hervorstehenden Anschlusskontakten 10. Das Gehäuse 8 hat ein Gewinde 11 und einen oberhalb des Gewindes 11 angeordneten Sechskant 12 zum Ansetzen eines nicht dargestellten Schraubenschlüssels. Weiterhin hat das Gehäuse 8 an der Unterseite des Sechskantes 12 einen Dichtring 13, der zum Abdichten des in dem Behälter 1 montierten Füllstandsgrenzsensors 3 vorgesehen ist. Im unteren Bereich hat das Gehäuse 8 Längsstege 14 und Querstege 15, die einen Abstand zu dem Widerstandselement 4 aufweisen. Das Widerstandselement 4 ist damit in einem von der in Figur 1 dargestellten Flüssigkeit 2 durchströmbaren Käfig gehalten.

Der Aufbau des Gehäuses 8 und die Befestigung der Anschlussdrähte 9 des Füllstandsgrenzsensors 3 ist in Figur 3 dargestellt. Das Gehäuse 8 weist zwei Gehäuseteile 16, 17 auf, die über Rastverbindungen (nicht dargestellt) miteinander verbunden sind. An den Gehäuseteilen 16, 17 sind jeweils Querstege 15, 15a angeordnet. Der Quersteg 15 des einen Gehäuseteils 16 hat Rillen 19 zur Aufnahme der Anschlussdrähte 9, während der Quersteg 15a des anderen Gehäuseteils 17 die Anschlussdrähte 9 in die Rillen 19 hineindrückende Vorsprünge 20 aufweist. Hierdurch sind die Anschlussdrähte 9 des Widerstandselementes 4 zwischen den an beiden Gehäuseteilen 16, 17 des Gehäuses 8 angeordneten Querstegen 15, 15a eingeklemmt.

Die Figur 4 zeigt in einer Schnittdarstellung durch das Gehäuse 8, dass das Widerstandselement 4 scheibenförmig gestaltet und ausschließlich an den Anschlussdrähten 9 befestigt ist. Hierdurch ist das Widerstandselement 4 schwingungssicher und vollständig von der Flüssigkeit 2 umströmbar gehalten.

## Patentansprüche

1. Füllstandsgrenzsensor, welcher zur Ermittlung eines Unter- oder Überschreitens einer vorgesehenen Füllhöhe von Flüssigkeit in einem Behälter ausgebildet ist, mit einem von elektrischem Strom durchflossenen, den elektrischen Widerstand bei steigender Temperatur verändernden Widerstandselement und mit einer Messeinheit zur Messung des elektrischen Widerstandes des elektrischen Leiters, **dadurch gekennzeichnet**, dass das Widerstandselement (4) ausschließlich in der vorgesehenen Füllhöhe angeordnet ist und einen oberhalb einer über der maximalen Flüssigkeitstemperatur liegenden Sprungtemperatur sprungartig verändernden elektrischen Widerstand aufweist.

2. Füllstandsgrenzsensor nach Anspruch 1, **dadurch gekennzeichnet**, dass das Widerstandselement (4) ein PTC-Element ist.

3. Füllstandsgrenzsensor nach Anspruch 1 oder 2, **dadurch gekennzeichnet**, dass das Widerstandselement (4) mit einem Vorwiderstand (6) in Reihe geschaltet ist.

4. Füllstandsgrenzsensor nach zumindest einem der vorhergehenden Ansprüche, **dadurch gekennzeichnet**, dass er ein aus zwei Gehäuseteilen (16, 17) zusammensteckbares Gehäuse (8) aufweist und dass zu dem Widerstandselement (4) führende Anschlussdrähte (9) zwischen den beiden Gehäuseteilen (16, 17) eingeklemmt sind.

5. Füllstandsgrenzsensor nach zumindest einem der vorhergehenden Ansprüche, **dadurch gekennzeichnet**, dass das Widerstandselement (4) mit den Anschlussdrähten (9) verlötet oder verschweißt ist und dass das Gehäuse (8) ausschließlich Berührungspunkte mit den Anschlussdrähten (9) aufweist.

6. Füllstandsgrenzsensor nach zumindest einem der vorherehenden Ansprüche, **dadurch gekennzeichnet**, dass eines der Gehäuseteile (16) mehrere dünnwandige Querstege (15) aufweist, welche Rillen (19) zur Aufnahme der Anschlussdrähte (9) aufweisen, und dass das zweite Gehäuseteil (17) an den Anschlußdrähten (9) anliegende Vorsprünge (20) aufweist.

7. Füllstandsgrenzsensor nach zumindest einem der vorhergehenden Ansprüche, **dadurch gekennzeichnet**, dass zwischen dem Widerstandselement (4) und den dazu benachbarten Bereichen des Gehäuses (8) ein Abstand vorhanden ist.

8. Füllstandsgrenzsensor nach zumindest einem der vorhergehenden Ansprüche, **dadurch gekennzeichnet**, dass die Anschlussdrähte (9) aus Konstantan gefertigt sind.

9. Füllstandsgrenzsensor nach zumindest einem der vorhergehenden Ansprüche, **dadurch gekennzeichnet**, dass er zwei in unterschiedlicher Höhe angeordnete Widerstandselemente (4) aufweist.

10. Verfahren zum Ermitteln eines Unter- oder Überschreitens einer vorgesehenen Füllhöhe von Flüssigkeit in einem Behälter, wobei ein in der vorgesehenen Füllhöhe angeordnetes, seinen elektrischen Widerstand mit steigender Temperatur veränderndes Widerstandselement von einem elektrischen Strom aufgeheizt und anschließend dessen elektrischer Widerstand gemessen wird, **dadurch gekennzeichnet**, dass dem Widerstandselement beim Aufheizen so viel elektrische Energie zugeführt wird, wie zum Überschreiten einer den elektrischen Widerstand sprungartig verändernden Sprungtemperatur eines an der Luft befindlichen Widerstandselementes erforderlich ist.

11. Verfahren nach Anspruch 10, **dadurch gekennzeichnet**, dass das Widerstandselement über einen Vorwiderstand mit elektrischem Strom aufgeheizt und anschließend die Spannung an dem Widerstandselement gemessen wird.

12. Verfahren nach Anspruch 10 oder 11 zur Ermittlung eines Mindestfüllstandes an Motoröl in einer Brennkraftmaschine eines Kraftfahrzeuges, **dadurch gekennzeichnet**, dass mit dem Aufheizen des Widerstandselementes nach Einschalten der Zündung und einige Sekunden vor dem Start der Brennkraftmaschine oder ungefähr fünf bis zehn Minuten nach einem Abschalten der Brennkraftmaschine begonnen wird.
